# FASCICULE DE BREVET EUROPEEN

(11) **EP 0 616 785 B1**
(45) Date de publication et mention de la délivrance du brevet: **03.03.1999**
(21) Numéro de dépôt: 94420102.9
(22) Date de dépôt: 24.03.1994
(51) Int. Cl.: A47J 31/057

(54) **Machine à boisson chaude pourvue d'un dispositif de variation du goût de la boisson**
Brühgetränkeapparat mit einer Vorrichtung zum Variieren der Geschmacksstärke
Hot beverage brewer comprising a device for varying the strength of the beverage

(30) Priorité: 24.03.1993 FR 9303634
(43) Date de publication de la demande: 28.09.1994
(60) Demande divisionnaire: 98201246.0
(73) Titulaire: SEB S.A., 69130 Ecully (FR)
(72) Inventeur: Delhom, Daniel, F-65110 Cauterets (FR); Charles, Patrick, F-65290 Louey (FR)
(74) Mandataire: Martin, Didier Roland Valéry

(56) Documents cités:
- DE-A- 2 750 884
- DE-A- 2 751 310
- FR-A- 2 625 893
- US-A- 3 935 805
- US-A- 4 108 053
- US-A- 4 328 740

## Description

La présente invention se rapporte au domaine technique général des machines à boisson chaude dans lesquelles la boisson chaude est obtenue par lixiviation c'est-à-dire par passage d'eau chaude à travers une mouture de granulométrie définie.

La présente invention concerne une machine à boisson chaude, en particulier une machine à café, comportant au moins une sortie d'eau chaude disposée au-dessus d'un porte-filtre, une plaque de répartition de l'eau chaude sur la surface de la mouture contenue dans le porte-filtre, ladite plaque étant pourvue de perforations et située sous la sortie d'eau, ainsi que des moyens de réglage de la répartition d'eau.

Il a déjà été tenté de maîtriser l'arrosage de la mouture de café en vue d'obtenir une extraction optimale des arômes contenus dans ladite mouture. A cet effet il a déjà été proposé dans la demande FR-A-2625893 d'équiper la goulotte d'arrosage avec un clapet commandé par un dispositif de temporisation. Le clapet peut occuper une première position correspondant au début de fonctionnement du cycle de la machine à café, et induisant, par l'intermédiaire de perforations, un arrosage périphérique de la mouture de café. Dans une seconde étape du cycle de fonctionnement de la machine à café, le clapet occupe une seconde position commandée par le dispositif de temporisation, position dans laquelle la mouture est arrosée dans sa zone centrale. Un tel dispositif aboutit donc en fin de compte, à un arrosage de la mouture qui est variable dans le temps, passant de manière discontinue d'un arrosage périphérique à un arrosage central de la mouture.

Un tel dispositif peut être considéré comme apportant une contribution positive à la tendance générale de maîtrise du phénomène de lixiviation et plus généralement de maîtrise de l'extraction des arômes d'une mouture de café, mais il y a lieu de considérer que ce dispositif de l'art antérieur présente également des inconvénients. Ainsi, sa mise en oeuvre nécessite le montage de pièces supplémentaires telles qu'un clapet et un dispositif de temporisation. Par ailleurs, ce dispositif ne permet pas de tenir compte des variations de granulométrie ou du type de mouture, ce qui au total ne permet pas à l'utilisateur de régler lui-même le goût de la boisson qu'il désire obtenir.

Il a également déjà été proposé dans la demande DE-A-2751310 d'améliorer l'extraction des arômes d'une mouture de café en permettant à l'utilisateur de régler lui-même la zone d'impact de l'eau sur la mouture de café. Ce dispositif antérieur comprend une plaque de répartition pourvue d'orifices périphériques et d'un orifice central de diamètre plus important. L'eau s'écoule sur la mouture à travers la plaque de répartition, à partir d'une sortie d'eau chaude disposée au-dessus de la plaque et dans l'axe de l'orifice central. La maîtrise de la répartition d'eau est assurée par un moyen de réglage réalisé sous la forme d'une plaque de déflexion pourvue d'une manette de réglage de position. La plaque de déflexion peut ainsi occuper une position au droit de l'orifice de sortie d'eau chaude, ou une seconde position en dehors de l'axe d'écoulement de l'eau chaude. L'utilisateur peut ainsi régler la répartition de l'eau chaude sur la surface de la mouture en ajustant la position de la plaque de déflexion qui dans sa position au droit de l'orifice de sortie conduit l'eau chaude à arroser la périphérie de la mouture, et dans l'autre position conduit l'eau chaude au contact de la zone centrale de la mouture.

Il doit ainsi être considéré que ce dispositif permet à l'utilisateur de régler lui-même dans une certaine mesure la qualité de l'extraction des arômes de la mouture, pour tenir compte par exemple du degré de remplissage ou du type de mouture utilisé. Il doit cependant être reconnu que ce dispositif ne permet qu'un réglage limité du goût de la boisson obtenue puisqu'il n'y a en tout et pour tout que deux positions d'extraction différentes.

On connaît également de document US-A-4 328 740 qui décrit une machine à boisson chaude, en particulier une machine à café, comportant au moins une sortie d'eau chaude disposée au-dessus d'un porte-filtre, ainsi qu'une plaque de répartition de l'eau chaude, comportant une série de secteurs individualisés délimités par des parois s'élevant à partir de la face supérieure de la plaque et au sein desquels sont ménagées des perforations. La sortie d'eau est montée avec une possibilité de mobilité relative pour permettre d'ajuster et de sélectionner une position relative de la sortie d'eau ou-dessus des secteurs individualisés. Les secteurs individualisés comportent des perforations qui occupent des positions radiales au-dessus de la mouture ou au-dessus du récipient de réception du café. Il est ainsi possible de dévier une partie de l'eau directement vers le récipient pour diluer le café contenu dans le récipient.

L'objet de l'invention vise en conséquence à proposer une nouvelle machine à boisson chaude, en particulier une machine à café, ne présentant pas les inconvénients des dispositifs antérieurs connus, et permettant au consommateur de régler lui-même à l'aide de moyens particulièrement simples, et selon une grande possibilité de variation, la répartition d'eau sur la mouture, pour obtenir une grande variété de type de boissons chaudes.

Un autre objet de l'invention vise à fournir une machine à boisson chaude dont le réglage de l'arrosage en fonction de la boisson désirée, est obtenu à l'aide de moyens particulièrement simples, et de manière reproductible.

Un autre objet de l'invention est de fournir une machine à boisson chaude dans laquelle l'utilisateur dispose d'une grande possibilité de réglage du type de boisson.

Les objets assignés à l'invention sont atteints à l'aide d'une machine à boisson chaude, en particulier machine à café, comportant au moins une sortie d'eau chaude disposée au-dessus d'un porte-filtre, une plaque de répartition de l'eau chaude, comportant une série de secteurs individualisés délimités par des parois s'élevant à partir de la face supérieure de la plaque et au sein desquels sont ménagées des perforations, la plaque et la sortie d'eau étant montées avec une possibilité de mobilité relative pour permettre d'ajuster et de sélectionner une position relative de la sortie d'eau au-dessus des secteurs individualisés, ou inversement, chaque secteur individualisé comportant au moins une perforation occupant, par rapport à l'axe de symétrie (x-x') du porte-filtre, une position radiale caractéristique dudit secteur, ladite position étant différente de la position radiale caractéristique de chaque autre secteur, la plaque de répartition située en regard du porte filtre le ou les perforation(s) correspondant à un secteur donné étant positionnée(s) de manière à agir sur la répartition de l'eau chaude pour une position relative sélectionnée, afin de modifier la répartition de l'eau chaude distribuée sur la surface de la mouture contenue dans le porte-filtre.

D'autres particularités et avantages de l'invention apparaîtront et ressortiront plus en détail à la lecture de la description faite ci-après, en référence aux dessins annexés, donnés à titre d'exemples illustratifs et non limitatifs dans lesquels :
- la figure 1 montre selon une coupe transversale un détail d'une machine à café conforme à l'invention, pourvue d'une plaque de répartition d'eau conforme à l'invention.
- la figure 2 montre une vue de dessus, prise selon la ligne II-II de la figure 1, une plaque de répartition de l'eau chaude conforme à l'invention.
- la figure 3 montre selon une coupe transversale une seconde variante de réalisation d'une plaque de répartition conforme à l'invention.
- la figure 4 montre selon une vue de dessus prise selon la ligne IV-IV de la figure 3, une seconde variante de l'invention.

Dans la description qui suit, il sera fait référence à une machine à boisson chaude constituée d'une machine à café, étant entendu que l'objet de l'invention s'applique à toutes machines à boisson chaude similaires aptes à assurer la réalisation d'une boisson chaude telle que par exemple du café, du thé.

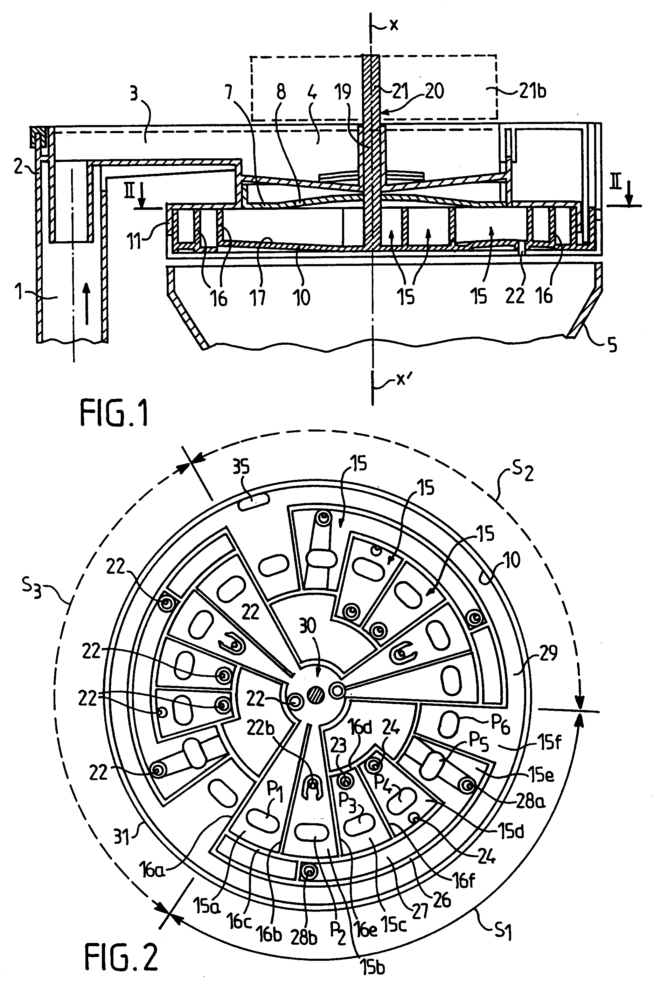

La figure 1 montre un détail de la partie supérieure d'une machine à café (non représentée dans son ensemble) du type à filtre. La machine à café comporte un tube 1 de montée d'eau chaude relié de manière classique à un réservoir et à un moyen de chauffe tel qu'une résistance blindée. Le tube de montée d'eau 1 est relié par sa partie supérieure 2 à un conduit de sortie 3 formant un coude à 90° débouchant dans une chambre de distribution 4 d'eau. Cette dernière définit par exemple un volume de révolution, par exemple cylindrique, d'axe de symétrie x-x'. La machine à café conforme à l'invention comporte également de manière classique un porte-filtre 5, de forme tronconique disposé sous la chambre de distribution 4, à distance de cette dernière et d'axe de symétrie confondu avec l'axe x-x'. Le porte-filtre 5 est de manière classique destiné à contenir une quantité définie de mouture de café. La chambre de distribution 4 définit dans sa partie inférieure une zone tampon destinée à régulariser le débit d'eau chaude provenant du conduit 3. La chambre de distribution 4 est limitée à sa partie inférieure par un fond 7 dans l'épaisseur duquel est ménagée au moins une sortie d'eau chaude 8, par exemple circulaire ou de forme oblongue. Selon une variante préférée de l'invention, le fond 7 est pourvu d'une série de trois sorties d'eau chaude 8 décalées angulairement de 120° chacune autour de l'axe x-x'. Le fond 7 s'étend au-dessus et à distance d'une plaque 10 de répartition d'eau, ayant par exemple la forme d'un disque, monté solidaire de la chambre 4 par l'intermédiaire d'un boîtier externe 11 rapporté par tous moyens appropriés sur le corps de la chambre 4. La plaque 10 et la sortie d'eau 8 sont montées avec une possibilité de mobilité relative, et dans la variante des Figures 1 et 2, la plaque 10 est montée mobile à rotation autour de son axe de symétrie confondu avec l'axe de symétrie x-x'. La plaque 10 s'étend également au-dessus du porte-filtre 5 et est en conséquence interposée directement entre la mouture contenue dans le porte-filtre 5 et la ou les sorties d'eau 8. La plaque 10 comporte une série de secteurs individualisés 15, délimités par une série de parois 16 s'élevant à partir de la face supérieure 17 de la plaque 10. Tel que cela est montré à la figure 1, la plaque 10 est pourvue d'un moyen de réglage 20 de sa position par rapport à la sortie d'eau 8. Ainsi la plaque 10 comporte un arbre de réglage 21 s'étendant selon l'axe x-x' à travers la chambre de répartition 4 et débouchant au-dessus et à l'extérieur de ladite chambre 4. Avantageusement l'arbre de réglage 21 est solidaire par sa partie supérieure d'un bouton de réglage 21b. De cette façon la plaque 10 peut être commandée par l'utilisateur et mise en rotation autour de l'axe x-x' de façon à ajuster la position de chaque secteur individualisé 15 et sélectionner l'un d'eux pour l'amener au droit de l'une des sorties d'eau 8.

Tel que cela est montré à la figure 2, chaque secteur individualisé 15 comporte au moins une perforation 22 occupant, par rapport à l'axe de symétrie x-x' de la mouture, une position radiale caractéristique du secteur, ladite position étant différente de la position radiale caractéristique de chaque autre secteur 15. Dans l'exemple particulier de réalisation montré à la figure 2 la plaque 10, en forme de disque, comporte trois séries identiques de secteur 15, sensiblement radiaux, décalés de 120° appartenant respectivement à des secteurs notés S1, S2 et S3. Chaque secteur S1, S2 ou S3, et par exemple le secteur S1 comporte un premier secteur radial 15a limité par deux parois radiales 16a, 16b, débouchant par une ouverture vers la zone centrale 30 de la plaque 10 et reliées entre elles à distance de la périphérie 31 de la plaque 10, par une paroi périphérique 16c. Dans l'exemple de réalisation montré à la figure 2 le premier secteur radial 15a est associé à au moins une et de préférence deux perforations 22 ménagées dans la zone centrale 30 au voisinage du centre de la plaque 10. Les perforations 22 de la zone centrale 30 peuvent être circulaires ou oblongues.

Le secteur S1 comporte un deuxième secteur radial 15b, adjacent au premier secteur radial 15a par l'intermédiaire de la paroi radiale 16b commune, de forme identique et relié par une ouverture à la zone centrale 30. Le deuxième secteur radial 15b est pourvu sensiblement dans sa partie centrale, d'une perforation centrale 22b. Le deuxième secteur radial 15b est limité extérieurement à sa périphérie par un prolongement de la paroi périphérique 16C.

La plaque de distribution 10 comporte un troisième secteur radial 15c, complètement fermé et adjacent au second secteur radial. Le troisième secteur radial 15c est délimité extérieurement par une paroi périphérique constituant un prolongement de la paroi périphérique 16c, et intérieurement par une paroi de fond 16d s'étendant sensiblement selon un diamètre du disque, au niveau de la perforation centrale 22b. Le troisième secteur radial 15c est délimité latéralement par une paroi radiale 16e commune au deuxième secteur radial 15b, et par une autre paroi latérale radiale 16f. Le troisième secteur radial 15c comporte une perforation 23 située au même niveau que la perforation centrale 22b c'est-à-dire sur un cercle identique coaxial au centre du disque.

La plaque de distribution 10 comporte un quatrième secteur radial 15d adjacent au troisième secteur 15c, de forme et de dimension identiques. Le quatrième secteur radial 15d comporte deux perforations 24 dont l'une est située sur le même cercle que la perforation 23, et dont l'autre est situé au voisinage de la paroi périphérique 16c délimitant la partie supérieure dudit quatrième secteur.

La plaque de distribution 10 comporte un cinquième secteur radial 15e, adjacent au quatrième secteur radial 15d, et se prolongeant radialement extérieurement au delà de la paroi périphérique 16c par une seconde paroi périphérique 26. Cette dernière est centrée sur le centre du disque et définit avec la paroi périphérique 16c un secteur annulaire 27 longeant les troisième et quatrième secteurs radiaux, respectivement 15c et 15d, pour se terminer au niveau du second secteur radial 15d. Le cinquième secteur radial 15e est de préférence pourvu de deux perforations 28a, 28b, respectivement situées sur un même cercle. Avantageusement la perforation 28b est disposée à l'extrémité du secteur annulaire 27 au niveau du deuxième secteur radial 15b, alors que la perforation 28a est située à l'autre extrémité du secteur annulaire 27.

La plaque de distribution 10 comprend enfin un sixième secteur radial 15f, adjacent au cinquième secteur radial 15e, comportant en outre un secteur périphérique annulaire 29 constituant la périphérie de ladite plaque 10. Le secteur périphérique annulaire 29 est pourvu d'au moins une perforation 35 associée et reliée à une conduite (non représentée aux figures) débouchant hors du porte-filtre pour fournir de l'eau chaude n'ayant pas traversé la mouture.

De manière avantageuse, les perforations 22, 22b, 23, 24, 28a, 28b présentent une surface d'autant plus importante qu'elles sont proches du centre de la plaque de distribution 10. En d'autres termes, les perforations 22 de la zone centrale 30 sont les plus importantes, et par exemple constituées d'orifices circulaires d'un diamètre de l'ordre de 4mm. Les perforations 22b, 23 et 24, situées en position médiane sont par exemple circulaires et d'un diamètre de l'ordre de 3 mm, alors que les perforations 28b et 28a ont un diamètre de l'ordre de 1,5 mm. Le débit de l'eau chaude s'écoulant sur la mouture est ainsi réglé de manière simple et décroît radialement du centre vers l'extérieur de la mouture proportionnellement à l'épaisseur de ladite mouture. Il est cependant possible, à titre de variante, d'inverser la position des perforations de grand diamètre en les disposant à la périphérie de la plaque 10, alors que les perforations de plus petit diamètre sont disposées vers le centre de la plaque 10.

Le fonctionnement du dispositif est le suivant.
L'utilisateur par action sur le dispositif de réglage 20 sélectionne tout d'abord la position relative de la ou des sorties d'eau 8 par rapport à au moins un secteur individualisé 15 spécifique en fonction du goût et de la force du café qu'il souhaite obtenir. Selon une première possibilité de réglage montrée à la figure 2 l'utilisateur peut amener le premier secteur radial 15a au droit et sous le ou les orifices de sortie 8. Dans cette première position la sortie d'eau 8 occupe la position notée P1 au-dessus et au droit du premier secteur radial 15a (Figure 2). Dans l'exemple de réalisation préférentiel montré à la figure 2 les trois sorties d'eau 8 sont respectivement au droit et au dessus de chacun des trois premiers secteurs radiaux 15a décalés de 120°. Dans cette position l'eau chaude arrive dans la chambre de répartition 4 et s'écoule ensuite par chacune des sorties d'eau chaude 8 dans chacun des premiers secteurs radiaux 15a. L'arrosage de la mouture s'effectue donc uniquement par les perforations centrales 22 de diamètre important ce qui provoque un écoulement préférentiel de fort débit à travers la totalité du gâteau de mouture et en particulier à travers sa plus grande épaisseur. Dans la position notée P1 l'utilisateur obtient donc un café de goût fort, par la conjonction du passage de l'eau chaude dans les perforations de surface importante et par arrosage du centre du gâteau de mouture.

L'utilisateur peut également positionner la plaque de répartition 10 pour que les sorties d'eau chaude 8 soient disposées au droit et au-dessus de chacun des deuxièmes secteurs radiaux 15b. Dans cette position, notée P2, l'arrosage s'effectue par les perforations 22b de diamètre intermédiaire et en position médiane, et simultanément par les perforations centrales 22. Dans la position notée P2 l'utilisateur obtient donc un café de goût intermédiaire puisqu'une partie de l'eau chaude a traversé la mouture sur une épaisseur globale inférieure à la position notée P1.

Lorsque l'utilisateur positionne le troisième secteur radial 15c au droit et sous les sorties d'eau chaude 8 il obtient un café d'un goût encore légèrement moins prononcé puisque dans cette dernière position notée P3 l'arrosage n'est plus effectué par les perforations centrales 22 mais par les perforations 23 en position médiane. Dans la position notée P4 l'utilisateur obtient un café de goût encore plus faible puisque globalement l'eau s'écoule dans le gâteau de mouture en traversant une épaisseur de mouture moindre que dans les positions précédentes. Enfin, la position notée P5 correspond à un café de goût faible puisque globalement l'arrosage s'effectue par le biais des orifices 28b et 28a de diamètre réduit et de position radiale la plus excentrée correspondant à l'épaisseur de mouture la plus faible. La position notée P6 correspond à un écoulement de l'eau à travers la perforation 35 reliée à un canal d'évacuation (non représenté aux figures) débouchant hors du porte-filtre 5. Dans cette position l'utilisateur n'obtient donc que de l'eau chaude.

En définitive, les arrosages différenciés de la mouture sont à l'origine de l'obtention de café de goûts différents même si au cours de la réalisation du café, le gâteau de mouture est finalement toujours noyé dans l'eau chaude. Il doit également être noté que le recours à des secteurs radiaux 15 permet de diminuer au maximum le parcours de l'eau chaude dans le labyrinthe, évitant ainsi une déperdition de chaleur.

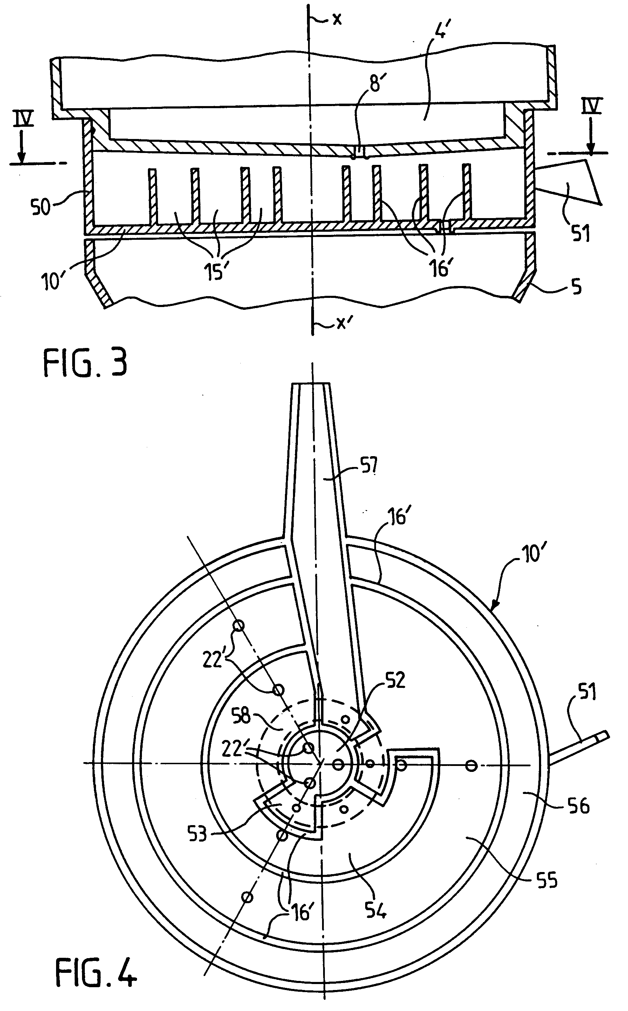

Les figures 3 et 4 montrent une seconde variante de réalisation ne différant essentiellement de la première variante des figures 1 et 2 que par une disposition différente des secteurs individualisés 15. Selon cette seconde variante de réalisation la plaque de distribution 10' est solidaire à sa périphérie d'une paroi circulaire 50 s'élevant à partir de ladite plaque 10'. Cette dernière est montée avec possibilité de rotation autour de l'axe x-x' sous la chambre de distribution 4'. La rotation de la plaque de distribution 10' peut être obtenue par actionnement- d'un levier ou d'une manette 51 solidaire de la paroi 50. Les secteurs individualisés 15' sont délimités par une série de parois 16' s'étendant de manière circulaire et de préférence concentriques à l'axe x-x', à partir de la surface supérieure de la plaque de distribution 10'. Cette dernière comporte un secteur central 52 délimité par une paroi 16' sensiblement circulaire à l'exception d'une zone radiale 53 formant une excroissance radiale par rapport au secteur central 52. Ce dernier comporte sensiblement en son centre une série de trois perforations 22'. La plaque de distribution 10' comporte en outre un secteur intermédiaire 54 délimité par une paroi 16' entourant au moins partiellement de manière concentrique le secteur radial 52. Le secteur intermédiaire 54 comprend également une série de trois perforations 22' situées sur un cercle de diamètre supérieur aux perforations 22' du secteur central 52. La plaque de distribution 10' comprend également un secteur extérieur 55 délimité par une paroi 16' circulaire et concentrique aux précédentes, ledit secteur extérieur 55 comportant trois perforations 22' situées sur un cercle de diamètre supérieur aux perforations 22' du secteur intermédiaire 52. La plaque de distribution 10' comporte à sa périphérie une paroi 16' circulaire définissant avec celle du secteur externe 55 un canal périphérique 56. La plaque de distribution 10' comporte en outre un canal radial 57 débutant à partir de la paroi 16' du secteur central 52 et débouchant en dehors de la périphérie de la plaque. Chacun des secteurs définis présente au moins une zone s'étendant dans un secteur annulaire commun 58 montré en ligne pointillé à la figure 4 et correspondant aux zones de projection possible des limites extérieures des sorties d'eau 8'. En particulier la zone radiale 53 formant excroissance est située dans le champ couvert par le secteur annulaire 58.

Cette seconde variante de réalisation fonctionne d'une manière analogue à la variante précédente et nécessite de la part de l'utilisateur un pré-positionnement par action sur le levier 51, des secteurs individualisés 52, 54 ou 55 relativement à la sortie d'eau 8'. Lorsque cette dernière est au droit de la zone radiale 53, l'arrosage de la mouture s'effectue donc par les perforations 22' du secteur central 52 ce qui correspond à l'obtention d'un café à goût prononcé. Lorsque par rotation de la plaque de distribution 10' la sortie d'eau 8' est disposée au droit d'une zone du secteur annulaire 58 s'étendant dans le secteur intermédiaire 54 l'arrosage de ce secteur donne un café de goût moyen. Enfin, lorsque la sortie d'eau 8' est au droit d'une zone du secteur annulaire 58 correspondant au secteur extérieur 55, l'arrosage de la mouture à lieu dans une zone périphérique, ce qui donne un café léger. Lorsque la sortie d'eau 8' est située au-dessus du canal radial 57, l'utilisateur obtient uniquement de l'eau chaude. Bien évidemment il est possible de positionner la sortie d'eau 8' à cheval sur deux secteurs adjacent, pour obtenir un café de goût intermédiaire.

A titre de variante il est bien évidemment possible d'inverser la structure des moyens de réglage et de réaliser une chambre de distribution 4' qui est mobile relativement à la plaque de distribution 10', le réglage consistant alors à ajuster la position de la sortie d'eau 8' au-dessus du ou des secteurs individualisés 15 ou 52, 54, 55 ou 56 sélectionné(s).

Il doit être constaté que l'on obtient ainsi par des moyens simples de réglage une multitude de réglage de la qualité et de la force du café que l'on désire obtenir.

## Revendications

1. Machine à boisson chaude, en particulier machine à café, comportant au moins une sortie d'eau chaude (8, 8') disposée au-dessus d'un porte-filtre (5), une plaque de répartition (10, 10') de l'eau chaude, comportant une série de secteurs individualisés (15, 15'), délimités par des parois (16, 16') s'élevant à partir de la face supérieure (17) de la plaque (10, 10') et au sein desquels sont ménagées des perforations (22, 22', 22b, 23, 24, 28a, 28b), la plaque (10, 10') et la sortie d'eau (8, 8') étant montées avec une possibilité de mobilité relative pour permettre d'ajuster et de sélectionner une position relative de la sortie d'eau (8, 8') au-dessus des secteurs individualisés (15,15') ou inversement, chaque secteur individualisé (15, 15') comportant au moins une perforation (22, 22', 22b, 23, 24, 28a, 28b) occupant, par rapport à l'axe de symétrie (x-x') du porte-filtre (5), une position radiale caractéristique dudit secteur, ladite position étant différente de la position radiale caractéristique de chaque autre secteur, la plaque de répartition (10, 10') étant située en regard du porte-filtre, le ou les perforation(s) correspondant à un secteur (15, 15') donné étant positionnée(s) de manière à agir sur la répartition de l'eau chaude pour une position relative selectionnée, afin de modifier la répartition de l'eau chaude distribuée sur la surface de la mouture contenue dans le porte-filtre (5).

2. Machine selon la revendication 1 caractérisée en ce que chaque secteur (15, 15') comporte au moins une portion de surface susceptible de se trouver au droit de la ou des sortie(s) d'eau (8, 8').

3. Machine selon la revendication 2 caractérisée en ce que la plaque (10, 10') est constituée d'un disque monté mobile à rotation autour de son axe de symétrie de manière à pouvoir amener par rotation un secteur (15, 15') sélectionné au droit d'au moins une sortie d'eau (8, 8').

4. Machine selon la revendication 2 caractérisée en ce que la plaque (10, 10') est constituée d'un disque fixe et en ce que la ou les sortie(s) d'eau (8, 8') sont montées mobiles de manière à pouvoir être amenées au droit de chaque secteur individualisé (15, 15') qui a été sélectionné.

5. Machine selon l'une des revendications 1 à 4 caractérisée en ce que la surface des perforations (22, 22', 22b, 23, 24, 28a, 28b) est d'autant plus importante que la perforation est proche du centre de la plaque (10, 10').

6. Machine selon l'une des revendications 1 à 5 caractérisée en ce que les secteurs individualisés (15, 15') forment une série de secteurs essentiellement radiaux et adjacents entre eux.

7. Machine selon l'une des revendications 1 à 6 caractérisée en ce que l'un des secteurs est associé à une conduite débouchant hors du porte-filtre pour fournir de l'eau chaude n'ayant pas traversée la mouture.

8. Machine selon la revendication 6 ou 7 caractérisée en ce qu'elle comporte de préférence trois séries (S1, S2, S3) identiques de secteurs (15, 15') radiaux décalés de 120°, chaque série (S1, S2, S3) comportant :
- un premier secteur radial (15a) limité par deux parois radiales (16a, 16b) débouchant par une ouverture vers la zone centrale (30) de la plaque (10) et reliées entre elles à distance de la périphérie de la plaque (10) par une paroi périphérique (16c), ledit premier secteur (15a) étant associé à au moins une et de préférence deux perforations (22) situées au voisinage de la zone centrale (30),
- un deuxième secteur radial (15b), adjacent au premier secteur radial (15a), de forme identique, relié par une ouverture à la zone centrale (30) et pourvu d'une perforation centrale (22b),
- un troisième secteur radial (15c) ,fermé et adjacent au second secteur radial (15b), limité extérieurement par une paroi périphérique (16c) prolongeant celle du second secteur (15b), ledit troisième secteur comportant une perforation (23) située au même niveau que la perforation centrale (22b),
- un quatrième secteur radial (15d) adjacent au troisième secteur (15c), de forme et de dimension identique au troisième secteur (15c), et comportant deux perforations (24) dont l'une est située sur le même cercle que la perforation 23, et dont l'autre est située au voisinage de la paroi périphérique (16c) délimitant la partie supérieure dudit quatrième secteur (15d),
- un cinquième secteur radial (15e) adjacent au quatrième secteur (15d) se prolongeant radialement extérieurement au-delà de la paroi périphérique (16c) par une seconde paroi périphérique (26) définissant un secteur annulaire (27) se terminant au niveau du second secteur radial (15b) et pourvu de deux perforations (28a, 28b),
- un sixième secteur radial (15f) adjacent au cinquième secteur (15e) et comportant en outre un secteur périphérique annulaire (27) dans lequel est ménagé une perforation (35).

9. Machine selon l'une des revendications 1 à 5, ou 7 caractérisée en ce qu'elle comporte une plaque (10') avec un secteur central (52) sensiblement circulaire pourvu de trois perforations (22), un secteur intermédiaire (54) entourant au moins en partie le secteur central (52) et pourvu de trois perforations (22), un secteur extérieur (55) entourant le secteur intermédiaire (54) et pourvu de trois perforations (22), un canal radial (57) s'étendant jusqu'au secteur central (52) et dépassant la périphérie de la plaque (10'), chaque secteur (52, 54, 55) ainsi que le canal radial (57) présentant au moins une zone s'étendant dans un secteur annulaire commun (58) situé au droit de la sortie d'eau (8').

10. Machine selon l'une des revendications 1 à 9 caractérisée en ce qu'elle est constituée par une machine à café filtre.

## Claims

1. A hot-beverage machine, in particular a coffee machine, including at least one hot water outlet (8, 8') disposed above a filter-holder (5), a hot-water distribution plate (10, 10') including a series of individual sectors (15, 15') which are defined by walls (16, 16') standing on the top face (17) of the plate (10, 10'), and within which perforations (22, 22', 22b, 23, 24, 28a, 28b) are formed, the plate (10, 10') and the water outlet (8, 8') being mounted so as to be relatively movable to enable the relative position of the water outlet (8, 8') above the individual sectors (15, 15') to be adjusted and selected, or vice-versa, each individual sector (15, 15') including at least one perforation (22, 22', 22b, 23, 24, 28a, 28b) occupying, relative to the axis of symmetry (x-x') of the filter-holder (5), a radial position characteristic of said sector, said position being different from the characteristic radial position of every other sector, the distribution plate (10, 10') being situated facing the filter-holder, the perforation(s) corresponding to a given sector (15, 15') being positioned so as to act on the distribution of hot water for a selected relative position, so as to modify the distribution of the hot water dispensed onto the surface of the grounds contained in the filter-holder (5).

2. A machine according to claim 1, characterized in that each sector (15, 15') includes at least one surface portion which may be positioned in register with the water outlet(s) (8, 8').

3. A machine according to claim 2, characterized in that the plate (10, 10') is constituted by a disk which is movably mounted to rotate about its axis of symmetry so that a selected sector (15, 15') can be positioned in register with at least one water outlet (8, 8').

4. A machine according to claim 2, characterized in that the plate (10, 10') is constituted by a fixed disk, and in that the water outlet(s) (8, 8') is/are movably mounted so that it/they can be positioned above each individual sector (15, 15') that has been selected.

5. A machine according to any one of claims 1 to 4, characterized in that the closer the perforation is to the center of the plate (10, 10'), the greater the area of the perforations (22, 22', 22b, 23, 24, 28a, 28b).

6. A machine according to any one of claims 1 to 5, characterized in that the individual sectors (15, 15') form a series of sectors which are essentially radial and adjacent to one another.

7. A machine according to any one of claims 1 to 6, characterized in that one of the sectors is associated with a duct opening out to the outside of the filter-holder to deliver the hot water which has not passed through the grounds.

8. A machine according to claim 6 or 7, characterized in that it preferably includes three identical series (S1, S2, S3) of radial sectors (15, 15') offset by 120°, each series (S1, S2, S3) including:
a first radial sector (15a) which is defined by two radial walls (16a, 16b) which open out to the central zone (30) of the plate (10) via an opening, and which are connected together at a distance from the periphery of the plate (10) by a peripheral wall (16c), said first sector (15a) being associated with at least one and preferably two perforations (22) situated in the vicinity of the central zone (30);
a second radial sector (15b) which is adjacent to the first radial sector (15a) and which is of identical shape, said second sector being connected to the central zone (30) via an opening, and being provided with a central perforation (22b) ;
a third radial sector (15c) which is closed and adjacent to the second radial sector (15b), and which is outwardly defined by a peripheral wall (16c) which is an extension of that of the second sector (15b), said third sector including a perforation (23) situated at the same level as the central perforation (22b);
a fourth radial sector (15d) which is adjacent to the third sector (15c) and which is of identical shape and size to that of the third sector (15c), and which includes two perforations (24), one being situated on the same circle as the perforation 23, and the other being situated in the vicinity of the peripheral wall (16c) which defines the top portion of said fourth sector (15d);
a fifth radial sector (15e) which is adjacent to the fourth sector (15d) and which extends radially outwards beyond the peripheral wall (16c) via a second peripheral wall (26) which defines an annular sector (27) which terminates at the level of the second radial sector (15b) and is provided with two perforations (28a, 28b); and
a sixth radial sector (15f) which is adjacent to the fifth sector (15e) and which also includes an annular peripheral sector (29) in which a perforation (35) is formed.

9. A machine according to any one of claims 1 to 5, or 7, characterized in that it includes a plate (10') having a substantially circular central sector (52) provided with three perforations (22), an intermediate sector (54) surrounding, at least in part, the central sector (52) and provided with three perforations (22), an outside sector (55) surrounding the intermediate sector (54) and provided with three perforations (22), and a radial channel (57) extending to the central sector (52) and exceeding the periphery of the plate (10'), each sector (52, 54, 55) and the radial channel (57) presenting at least one zone extending into a common annular sector (58) which is situated in register with the water outlet (8').

10. A machine according to any one of claims 1 to 9, characterized in that it is constituted by a filter-coffee machine.

## Patentansprüche

1. Brühgetränkemaschine, insbesondere Kaffeemaschine, mit mindestens einem oberhalb eines Filterträgers (5) angeordneten Heißwasseraustritt (8, 8'), einer Verteilungsplatte (10, 10') für das heiße Wasser, mit einer Reihe von vereinzelten Bereichen (15, 15'), die von Wänden (16, 16') begrenzt sind, welche sich ausgehend von der Oberseite (17) der Platte (10, 10') nach oben erstrecken, und innerhalb derer Bohrungen (22, 22', 22b, 23, 24, 28a, 28b) angebracht sind, wobei die Platte (10, 10') und der Wasseraustritt mit der Möglichkeit einer relativen Beweglichkeit montiert sind, um eine relative Stellung des Wasseraustritts (8, 8') oberhalb der vereinzelten Bereichen (15, 15') einzustellen und auszuwählen oder umgekehrt, wobei jeder vereinzelte Bereich (15, 15') eine Bohrung (22, 22', 22b, 23, 24, 28a, 28b) enthält, die in Bezug auf die Symmetrieachse (x-x') des Filterträgers (5) eine für den Bereich charakteristische radiale Stellung einnimmt, wobei diese Stellung von der für jeden weiteren Bereich charakteristischen radiale Stellung verschieden ist, dadurch gekennzeichnet, daß die Verteilungsplatte (10, 10') gegenüber dem Filterträger liegt, wobei die einem bestimmten Bereich (15, 15') entsprechende(n) Bohrung(en) so positioniert ist/sind, daß sie auf die Warmwasserverteilung für eine ausgewählte relative Stellung einwirkt/einwirken, um die Verteilung des auf der Oberfläche des im Filterträger (5) befindlichen Mahlguts gelieferten warmen Wassers zu verändern.

2. Maschine nach Anspruch 1, dadurch gekennzeichnet, daß jeder Bereich (15, 15') mindestens einen Oberflächenabschnitt aufweist, der sich gegenüber dem Wasseraustritt oder der Wasseraustritte (8, 8') befinden kann.

3. Maschine nach Anspruch 2, dadurch gekennzeichnet, daß die Platte (10, 10') aus einer um ihre Symmetrieachse drehbar beweglich angebrachte Scheibe besteht, so daß ein ausgewählter Bereich (15, 15') gegenüber von mindestens einem Wasseraustritt (8, 8') gebracht werden kann.

4. Maschine nach Anspruch 2, dadurch gekennzeichnet, daß die Platte (10, 10') aus einer feststehenden Scheibe besteht und daß der Wasseraustritt oder die Wasseraustritte (8, 8') beweglich angebracht ist/sind, so daß er/sie gegenüber von jedem vereinzelten Bereich (15, 15') gebracht werden kann/können, der ausgewählt wurde.

5. Maschine nach einem der Ansprüche 1 bis 4, dadurch gekennzeichnet, daß um so größer die Oberfläche der Bohrungen (22, 22', 22b, 23, 24, 28a, 28b) ist, je näher sich die Bohrung bezüglich der Mitte der Platte (10, 10') befindet.

6. Maschine nach einem der Ansprüche 1 bis 5, dadurch gekennzeichnet, daß die vereinzelten Bereiche (15, 15') eine Reihe von im wesentlichen radialen und einander angrenzenden Bereichen bilden.

7. Maschine nach einem der Ansprüche 1 bis 6, dadurch gekennzeichnet, daß einer der Bereiche mit einer Leitung verbunden ist, die außerhalb des Filterträgers mündet, um warmes Wasser zu liefern, das nicht durch das Mahlgut hindurchgeflossen ist.

8. Maschine nach Anspruch 6 oder 7, dadurch gekennzeichnet, daß sie vorzugsweise drei identische Reihen (S1, S2, S3) von um 120° versetzten radialen Bereichen (15, 15') enthält, wobei jede Reihe (S1, S2, S3) enthält:
- einen ersten radialen Bereich (15a), der von zwei radialen, in eine Öffnung zur zentralen Zone (30) der Platte (10) mündenden und miteinander mit Abstand vom Umfang der Platte (10) durch eine Umfangswand (16c) verbundenen Wänden (16a, 16b) begrenzt ist, wobei der erste Bereich (15a) mindestens einer und vorzugsweise zwei Bohrungen (22) zugeordnet ist, die in der Nähe der zentralen Zone (30) liegen,
- einen an den ersten radialen Bereich (15a) angrenzenden zweiten radialen Bereich (15b), der eine identische Form aufweist, mittels einer Öffnung mit der zentralen Zone (30) verbunden und mit einer zentralen Bohrung (22b) versehen ist,
- einen geschlossenen und an den zweiten radialen Bereich (15b) angrenzenden dritten radialen Bereich (15c), der nach außen mit einer Umfangswand (16c) begrenzt ist, die diejenige des zweiten Bereichs (15b) verlängert, wobei der dritte Bereich eine Bohrung (23) enthält, die auf gleicher Höhe wie die zentrale Bohrung (22b) liegt,
- einen an den dritten Bereich (15c) angrenzenden vierten Bereich (15d), dessen Form und Abmessungen mit denjenigen des dritten Bereichs (15c) identisch sind, und welcher zwei Bohrungen (24) enthält, wobei die eine sich auf dem selben Kreis wie die Bohrung (23) befindet und die andere sich in der Nähe der Umfangswand (16c) befindet, die den oberen Teil des vierten Bereichs (15d) begrenzt,
- einen an den vierten Bereich (15d) angrenzenden fünften Bereich (15e), der sich durch eine zweite Umfangswand (26) radial außen über die Umfangswand (16c) hinaus verlängert, die einen ringförmigen Bereich (27) begrenzt, der beim zweiten radialen Bereich (15b) endet und mit zwei Bohrungen (28a, 28b) versehen ist,
- einen an den fünften Bereich (15e) angrenzenden sechsten Bereich (15f), der zudem einen ringförmigen Umfangsbereich (27) enthält, in welchem eine Bohrung (35) angebracht ist.

9. Maschine nach einem der Ansprüche 1 bis 5 oder 7, dadurch gekennzeichnet, daß sie eine Platte (10') enthält mit einem im wesentlichen kreisförmigen zentralen Bereich (52), der mit drei Bohrungen (22) versehen ist, einem Zwischenbereich (54), der mindestens teilweise den zentralen Bereich (52) umgibt und mit drei Bohrungen (22) versehen ist, einem Außenbereich (55), der den Zwischenbereich (54) umgibt und mit drei Bohrungen (22) versehen ist, einem radialen Kanal (57), der sich bis zum zentralen Bereich (52) erstreckt und über den Umfang der Platte (10') vorsteht, wobei jeder Bereich (52, 54, 55) sowie der radiale Kanal (57) mindestens eine Zone aufweist, die sich in einem gemeinsamen ringförmigen Bereich (58) erstreckt, der sich gegenüber dem Wasseraustritt (8') befindet.

10. Maschine nach einem der Ansprüche 1 bis 9, dadurch gekennzeichnet, daß sie durch eine Filterkaffeemaschine gebildet ist.
